(19) Europäisches Patentamt

European Patent Office

Office européen des brevets

(11) EP 1 482 650 A1

(12) EUROPEAN PATENT APPLICATION

(43) Date of publication:
01.12.2004 Bulletin 2004/49

(51) Int Cl.$^7$: H04B 1/707

(21) Application number: 03388039.4

(22) Date of filing: 27.05.2003

(84) Designated Contracting States:
AT BE BG CH CY CZ DE DK EE ES FI FR GB GR
HU IE IT LI LU MC NL PT RO SE SI SK TR
Designated Extension States:
AL LT LV MK

(71) Applicant: Telefonaktiebolaget LM Ericsson
(publ)
164 83 Stockholm (SE)

(72) Inventor: Reial, Andres
222 41 Lund (SE)

(74) Representative: Boesen, Johnny Peder et al
Zacco Denmark A/S
Hans Bekkevolds Allé 7
2900 Hellerup (DK)

(54) **Selecting fingers for RAKE combining**

(57) Multipath components of a signal transmitted through a time-varying digital radio channel are received with individual delays. The delays of the individual multipath components are estimated by calculating a number of delay estimates. Estimates which do not correspond to actual physical paths may be included, and at least some of the delay estimates are used for RAKE combining. It is decided which delay estimates most likely correspond to actual physical paths, and only those delay estimates that are decided to correspond to actual physical paths are included in the RAKE combining. In this way, a receiver for detecting multipath components, which is more robust and better able to exclude "ghost" paths without excluding true paths, is provided.

Received data

RAKE finger selection

Delay est.

Channel est.

RAKE despread + comb.

11 12 14 13

Fig. 6

**Description**

Technical Field of the Invention

The invention relates to a method of detecting multipath components in a time-varying fading radio channel in a digital wireless communications system in which individual multipath components of a signal transmitted through said channel are received with individual delays. The method comprises the steps of estimating the delays of said individual multipath components by calculating a number of delay estimates, wherein said number of delay estimates may include estimates which do not correspond to actual physical paths, and using at least some of said delay estimates for RAKE combining. The invention further relates to a receiver having means for detecting multipath components in a time-varying fading radio channel.

Description of Related Art

In wireless communications systems the physical channel between a transmitter and a receiver is typically formed by a radio link. As an example, the transmitter could be a base station, and the receiver could be a mobile station, or vice versa. In most cases the transmit antenna is not narrowly focused towards the receiver. This means that the transmitted signals may propagate over multiple paths. In addition to a possible direct path from the transmitter to the receiver, many other propagation paths caused by reflections from objects in the surroundings exist. Thus, the receiver may receive multiple instances of the same signal at different times, i.e. with different delays, because different portions of the signal are reflected from various objects, such as buildings, moving vehicles or landscape details.

These different portions of the signal are a cause of interference in the receiver. Depending on the time resolution of the transmission system and the instantaneous phase relationship, portions with similar propagation distances combine at the receiver and form a distinct multipath component. The effect of the combining depends on the instantaneous relationship of the carrier wavelength and distance differences, and it may thus for a given multipath component be either enhancing or destructive. In case of destructive interference, the combining leads to significant decrease of the magnitude, or fading, of the path gain for that path.

This interference is treated differently in different transmission systems. Many transmission systems try to reduce the effect of multipath propagation and fading by using receivers that combine the data symbol energy from all multipath components. In Code Division Multiple Access (CDMA) and Wideband Code Division Multiple Access (WCDMA) systems the energy of the different received portions of the signal may be utilized in the receiver by using a so-called RAKE receiver.

In these systems spreading and despreading is used. Data are transmitted from the transmitter side using a spread spectrum modulation technique wherein the data are scattered across a wide range of frequencies. Each channel is assigned a unique spreading code that is used to spread the data across the frequency range. The spreading code is a pseudo-random noise (PN) code and is composed of e.g. a binary sequence of 1's and 0's, called "chips", that are distributed in a pseudo-random manner and have noise-like properties. The number of chips used to spread one data bit, i.e. chips/bit, may vary, and it depends, at least in part, on the data rate of the channel and the chip rate of the system.

In the receiver the received signal must be despread and demodulated with the same spreading code using the same chip rate to recover the transmitted data. Furthermore, the timing of the demodulation must be synchronized, i.e. the despreading code must be applied to the received signal at the correct instant in time, which can be difficult due to the multipath effects mentioned above. The performance of a CDMA receiver is improved if the signal energy carried by many multipath components is utilized. This is achieved by using a RAKE receiver, where each multipath component is assigned a despreader whose reference copy of the spreading code is delayed equally to the path delay of the corresponding multipath component. The outputs of the despreaders, i.e. the fingers of the RAKE receiver, are then coherently combined to produce a symbol estimate.

Thus the RAKE receiver requires knowledge of the multipath delays and the values of the channel impulse response for all paths. To achieve the best possible signal-to-noise ratio (SNR) at the output of the RAKE combiner, the signal energy from as many physical paths as possible should be collected. In addition, tracking as many different physical paths as possible (higher utilized diversity) significantly increases the robustness of reception, since this reduces the probability of a simultaneous deep fade of all paths, a phenomenon leading to serious and sometimes catastrophic degradation of the block error rate (BLER).

However, it is only beneficial to assign more delays to RAKE fingers if the assigned delays actually correspond to physical paths in the propagation channel. If there is no physical path present at a specified delay, the inclusion of the corresponding finger in RAKE combining will increase the noise power and reduce the signal-to-interference ratio of the RAKE output.

A typical RAKE receiver first locates the multipath components by performing delay estimation. This involves evaluating the impulse response of the channel over the whole range of possible delays of the channel. The resulting delay profile, which may be a complex delay profile or a power delay profile, may then be subjected to peak detection, and the peak locations are reported to the RAKE receiver as the delay estimates for the multipath components. The delay estimates are then used to estimate the corresponding complex channel coefficients by despreading a pilot sequence, and possibly filtering the results over time to reduce the effect of noise and interference. Thus, the channel parameters are estimated in collaboration between the delay estimator, which determines the temporal alignment of the despreaders for the RAKE fingers, and the channel estimator, which estimates the complex coefficients to be used by the RAKE combiner. The noise plus interference power is also estimated.

Each reported delay estimate is then assigned a RAKE finger, and the received chip sequence is despread (correlated) with the proper spreading code delayed equally to the given path delay. Typically, the despread output symbols from each RAKE finger are then summed using summing weights based on the channel and interference estimates.

Unfortunately, the dynamics of a mobile multipath channel (birth or death of a path, shadowing or fading) and the corruption caused by residual interference and noise may lead to a situation where noise and interference is present in the received signal. Due to such noise and imperfections in the practical implementation of the delay estimation, it may happen that some of the delays reported to the RAKE do not actually correspond to a physical propagation path. Thus, when a number of path estimates are available from the delay estimator, several of them will typically correspond to physical paths, but some may occur entirely due to the noise in the channel estimator. As mentioned earlier, the inclusion of such "ghost" paths in RAKE combining will just reduce the signal-to-interference ratio of the output symbol and increase the block error rate, and the inclusion of "ghost" paths should be avoided.

The performance of the RAKE combiner can be improved by excluding path candidates that seem "unlikely" from the combining. One approach to separate the actual (true) path estimates from the ghost estimates can be based on thresholding methods where only paths having "sufficiently large" magnitudes are included in the combining. The threshold may be based e.g. on the largest path estimate or the interference and noise level. However, "ghost" paths are not always smaller than true paths, and thus, although the thresholding methods can often improve performance by excluding some "ghost" paths, they may also significantly exclude true paths.

The thresholding methods are generally not very robust, since the thresholds, especially the maximum-related threshold, tend to vary in time due to fading, while the true channel statistics vary at a much slower rate. Thus thresholding methods are not optimal for avoiding the inclusion of "ghost" paths.

Therefore, it is an object of the invention to provide a method of detecting multipath components that is more robust and better able to exclude "ghost" paths without excluding true paths.

Summary

According to the invention the object is achieved in that the method further comprises the steps of deciding which delay estimates most likely correspond to actual physical paths, and including in the RAKE combining only those delay estimates that are decided to correspond to actual physical paths.

By using this more intelligent way to select the estimates that are used in the RAKE combining, and thus with a higher probability excluding from the RAKE combining the delay positions which do not correspond to physical paths in the radio propagation channel the receiver performance is improved. The signal-to-noise ratio of the RAKE output is improved since fewer or no noise induced terms are included in the RAKE output symbol. As a result of the selection according to the invention, the number of "ghost" paths that are reported to the RAKE is reduced, and fewer actual physical paths are excluded from RAKE combining. Thereby the signal-to-interference ratio of the RAKE output is increased, and the block error rate performance is improved.

In one embodiment of the invention, the step of deciding which delay estimates most likely correspond to actual physical paths comprises the steps of formulating models for "path" and "no path" hypotheses based on the statistical properties of channel fading, calculating for each delay estimate the probability of the estimate belonging to the "path" hypothesis, deciding from the calculated probabilities which delay estimates should be included in the RAKE combining. In this way the selection criteria are aided by utilizing the known statistical model of the channel fading process. When the statistical model is used, a probability of a given delay corresponding to a physical path may be given, instead of a yes/no decision. Further, the criteria in the algorithms do not depend on the instantaneous fading state of the channel.

In this case, the probabilities may be calculated by means of a directly estimated density of true coefficients, Neyman-Pearson detection, or maximum likelihood estimation of the unknown parameter.

In another embodiment, the step of deciding which delay estimates most likely correspond to actual physical paths comprises the steps of calculating a measure of Euclidean distance between received data and data modelled according to different channel order hypotheses, adding a channel order dependent penalty term to said measure of distance to obtain a modified measure for each channel order hypothesis, selecting the channel order having the lowest modified measure, and deciding from the selected channel order which delay estimates should be included in the RAKE combining. In this embodiment, the channel model order is estimated by evaluating a figure of merit based on the received data, not simply comparing multiple coefficients. Also here, the criteria in the algorithms do not depend on the instantaneous fading state of the channel.

As mentioned, the invention further relates to a receiver having means for detecting multipath components in a time-varying fading radio channel in a digital wireless communications system in which individual multipath components of a signal transmitted through said channel are received with individual delays. The receiver comprises means for estimating the delays of said individual multipath components by calculating a number of delay estimates, wherein said number of delay estimates may include estimates which do not correspond to actual physical paths, and the receiver is adapted to use at least some of said delay estimates for RAKE combining. When the receiver further comprises means for deciding which delay estimates most likely correspond to actual physical paths and selecting for the RAKE combining only those delay estimates that are decided to correspond to actual physical paths, a receiver for detecting multipath components, which is more robust and better able to exclude "ghost" paths without excluding true paths, is provided.

In one embodiment of the invention, the means for deciding and selecting delay estimates comprises means for formulating models for "path" and "no path" hypotheses based on the statistical properties of channel fading, and means for calculating for each delay estimate the probability of the estimate belonging to the "path" hypothesis, and deciding from the calculated probabilities which delay estimates should be included in the RAKE combining. In this way the selection criteria are aided by utilizing the known statistical model of the channel fading process. When the statistical model is used, a probability of a given delay corresponding to a physical path may be given, instead of a yes/no decision. Further, the criteria in the algorithms do not depend on the instantaneous fading state of the channel.

In this case, the means for calculating probabilities may be adapted to use a directly estimated density of true coefficients, Neyman-Pearson detection, or maximum likelihood estimation of the unknown parameter.

In another embodiment, the means for deciding and selecting delay estimates comprises means for calculating a measure of Euclidean distance between received data and data modelled according to different channel order hypotheses, means for adding a channel order dependent penalty term to said measure of distance to obtain a modified measure for each channel order hypothesis, and means for selecting the channel order having the lowest modified measure and deciding from the selected channel order which delay estimates should be included in the RAKE combining. In this embodiment, the channel model order is estimated by evaluating a figure of merit based on the received data, not simply comparing multiple coefficients. Also here, the criteria in the algorithms do not depend on the instantaneous fading state of the channel.

The means for deciding and selecting delay estimates may be arranged separately from said estimating means to select a subset of the delay estimates provided by the estimating means.

Alternatively, the means for deciding and selecting delay estimates may be integrated into said estimating means so that only the selected delay estimates are provided by the estimating means.

Brief Description of the Drawings

The invention will now be described more fully below with reference to the drawings, in which

figure 1 shows an example of multiple paths between a base station and a mobile station,

figure 2 shows a power delay profile for the paths illustrated in figure 1,

figure 3 illustrates the use of a delay estimator in a typical RAKE receiver,

figure 4 shows a sampled power delay profile corresponding to the profile shown in figure 2,

figure 5 shows a sampled power delay profile with higher noise and one path reduced due to fading,

figure 6 shows a RAKE receiver with a finger selection block according to the invention,

figure 7 shows a flow chart illustrating the steps of a method according to the invention,

figure 8 shows the structure of a finger selection block according to a first embodiment of the invention,

figure 9 shows the structure of a finger selection block according to a second embodiment of the invention, and

figure 10 shows a RAKE receiver where the finger selection block is incorporated in the delay estimator.

Detailed Description of Embodiments

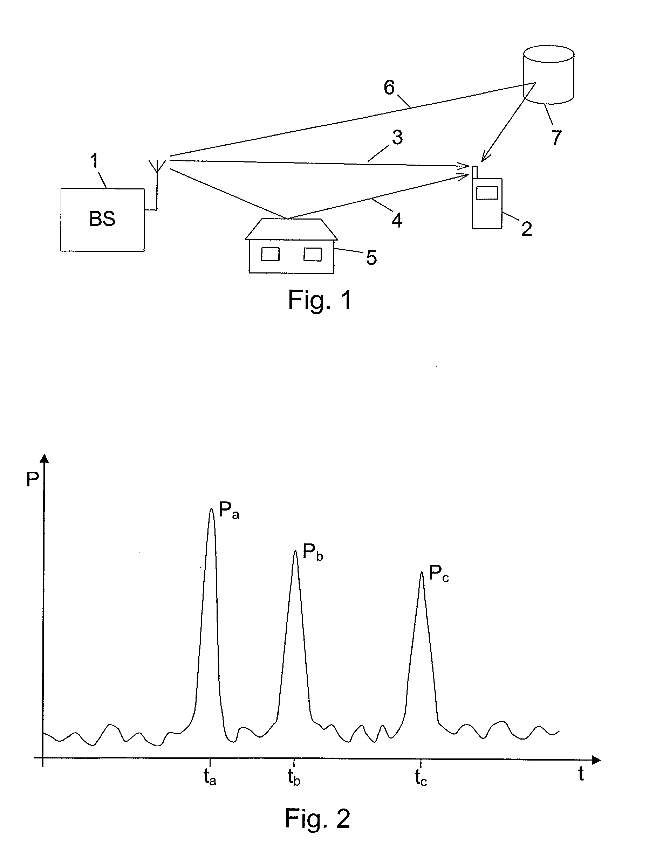

Figure 1 shows a situation in which a base station 1 and a mobile station 2 of a wireless communications system communicate with each other. As an example, a signal transmitted from the base station 1 is received by the mobile station 2. However, the transmitted signal travels along multiple paths from the base station to the mobile station. In this case there is a direct and unobstructed propagation path 3, but in addition to this direct path, reflections from objects in the surroundings cause a number of indirect paths to exist. Two such paths are shown in the figure. One indirect path 4 is reflected from a house 5, while another path 6 is caused by reflection from another building 7.

Since the part of a signal transmitted via one of the indirect paths 4 and 6 has to travel a longer distance to arrive at the mobile station 2, compared to the part of the signal travelling via the direct path 3, multiple instances of the same signal will be received by the mobile station 2 at different times, i.e. with different delays.

Thus, if a pilot signal is transmitted from the base station 1, the power P received at the mobile station 2 as a function of the time t may look as illustrated in figure 2, which shows an example of a power delay profile. The power delay profile shows all signals received at the mobile station, including noise and interference signals. However, only the peaks in the power delay profile correspond to the multipath components of the transmitted signal. Together these peaks form the impulse response of the channel. In figure 2 the peak $P_a$ received at the time $t_a$ corresponds to the direct path 3 in figure 1, while the peaks $P_b$ and $P_c$ received at the times $t_b$ and $t_c$, respectively, correspond to the indirect paths 4 and 6 in figure 1. Thus, as an example, it is seen that the delay of the path 6 (corresponding to the peak $P_c$) is larger than the delay of the path 3 (corresponding to the peak $P_a$).

Since the structure of the propagation channel does not remain constant over time, the delays of existing paths change, old paths disappear and new paths appear. The changing delays of all known multipath components should be tracked, and new paths should be discovered quickly after they appear.

The mobile station 2 and the base station 1 may be adapted for use in e.g. a Code Division Multiple Access (CDMA) system or a Wideband Code Division Multiple Access (WCDMA) system, and in that case the mobile station 2 may use a RAKE receiver, which is capable of identifying and tracking the various multipath signals for a given channel. In this way the energy or power of several multipath components can be utilized in the receiver. As mentioned above, this may be achieved by using a RAKE receiver, where each multipath component is assigned a despreader whose reference copy of the spreading code is delayed equally to the path delay of the corresponding multipath component. The outputs of the despreaders, i.e. the fingers of the RAKE receiver, are then coherently combined to produce a symbol estimate. Thus the RAKE receiver requires knowledge of the multipath delays and the values of the channel impulse response for all paths. The signal energy from as many physical paths as possible should be collected.

However, it is only beneficial to assign more delays to RAKE fingers if the assigned delays actually correspond to physical paths in the propagation channel. If there is no physical path present at a specified delay, the inclusion of the corresponding finger in RAKE combining will increase the noise power and reduce the signal-to-interference ratio of the RAKE output.

Although reference is here made to a RAKE receiver in a mobile station, it should be noted that the algorithms described below may be used at any CDMA receiver, i.e. in a mobile station or a base station, and the transmission may be uplink or downlink.

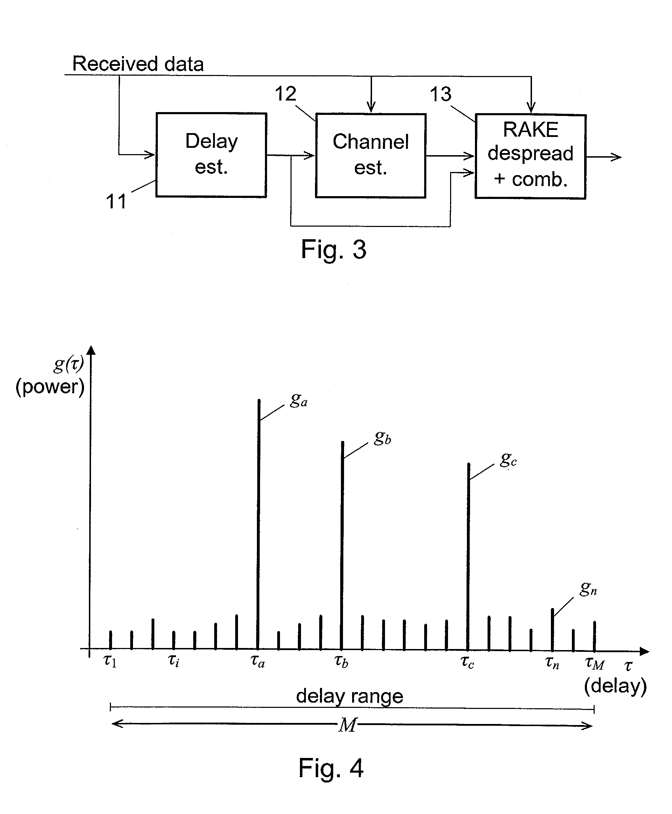

A typical RAKE receiver first locates the multipath components by performing delay estimation. This is illustrated in figure 3, in which the received data are fed to the delay estimator 11. The delay estimation involves evaluating the impulse response of the channel over the range of possible delays of the channel. The resulting delay profile, which may be a complex delay profile or a power delay profile, may then be subjected to peak detection, and the peak locations are reported to the RAKE receiver 13 as the delay estimates for the multipath components. The delay estimates are also used in the channel estimator 12 to estimate the corresponding complex channel coefficients by despreading a pilot sequence, and possibly filtering the results over time to reduce the effect of noise and interference. Thus, the channel parameters are estimated in collaboration between the delay estimator 11, which determines the temporal alignment of the despreaders for the RAKE fingers, and the channel estimator 12, which estimates the complex coefficients to be used by the RAKE combiner 13. The noise plus interference power is also estimated.

Typically, the delay profile of the received signal will not be available as a continuous curve as the one illustrated in figure 2. Instead, it will consist of a number of sample values. This is illustrated in figure 4, which shows a sampled power delay profile corresponding to the continuous delay profile shown in figure 2. For each delay value $\tau_i$, the corresponding power value $g(\tau_i)$ is shown. In this case the available estimates of the power delay profile constitutes a contiguous sequence of equally spaced samples, $\tau_i = \tau_0 + i\Delta\tau$. Thus the power values $g_a$, $g_b$ and $g_c$ at the delay values $\tau_a$, $\tau_b$ and $\tau_c$ correspond to the peaks $P_a$, $P_b$ and $P_c$ shown in figure 2.

In the RAKE combiner 13, each reported delay estimate is assigned a RAKE finger, and the received chip sequence is despread (correlated) with the proper spreading code delayed equally to the given path delay. Typically, the despread output symbols from each RAKE finger are then summed using summing weights based on the channel and interference estimates.

Unfortunately, the dynamics of a mobile multipath channel (birth or death of a path, shadowing or fading) and the corruption caused by residual interference and noise may lead to a situation where noise and interference is present in the received signal. This is also seen in figures 2 and 4. Due to such noise and imperfections in the practical implementation of the delay estimation, it may happen that some of the delays reported to the RAKE do not actually correspond to a physical propagation path. In figure 4 the three delay values $\tau_a$, $\tau_b$ and $\tau_c$ clearly correspond to the physical paths 3, 4 and 6 in figure 1, while e.g. the power value $g_n$ at the delay value $\tau_n$ is noise generated.

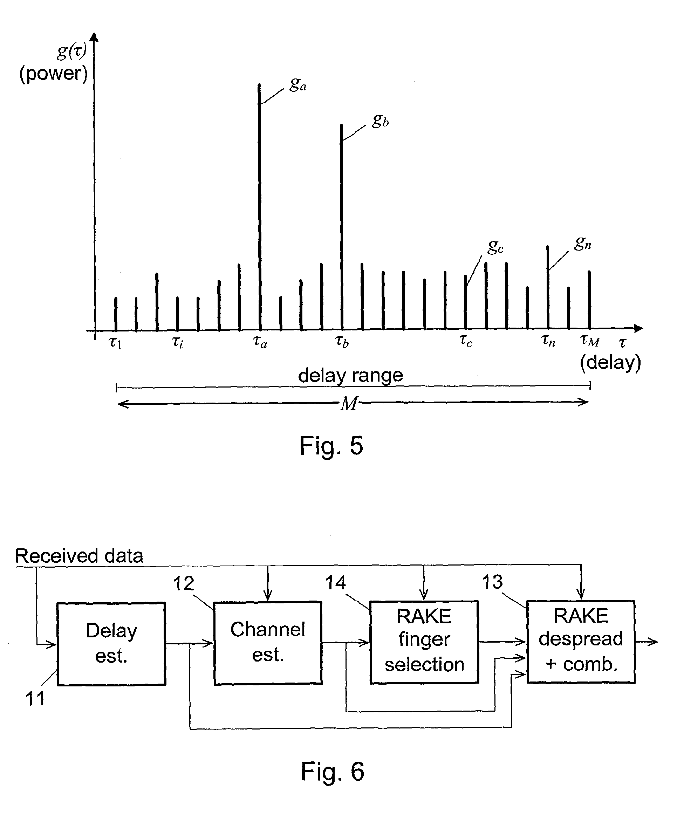

However, the situation could just as well be as shown in figure 5, where the noise level is higher and $g_c$ is reduced due to fading. Here the delay estimator would tend to report the delay values $\tau_a$, $\tau_b$ and $\tau_n$ to the RAKE as the best estimates. Thus the delay value $\tau_c$, which actually corresponds to a physical path, is not reported and cannot be used in the RAKE combining. Instead, the noise generated delay value $\tau_n$, which should be avoided, is used in the RAKE combining. Thus, when a number of path estimates are available from the delay estimator, several of them will typically correspond to physical paths, but some may occur entirely due to the noise in the channel estimator. As mentioned earlier, the inclusion of such "ghost" paths in RAKE combining will just reduce the signal-to-interference ratio of the output symbol and increase the block error rate, and the inclusion of "ghost" paths should be avoided.

If the true number $N_r$ of physical paths in a channel (which is also called the channel order) is known, the number $N_a$ of active fingers in the RAKE combiner should be equal to the channel order to ensure that all paths are utilized. Normally, however, the channel order is not known, and therefore the simplest way to proceed would be to assume the other way round that the number of physical paths equals the number of active fingers in the RAKE combiner and then pick up to $N_a$ of the "best" path estimates out of the available estimates for the combining, i.e. to exclude some unlikely path candidates from combining. A typical approach to find the "best" estimates is to assume that path estimates $g_i$ that are "small" are noise-induced and should be excluded. The magnitudes of the path estimates are thus compared to a reference or threshold, and those that do not exceed the threshold are removed. The threshold may be formulated as a fraction of the path estimate having the highest magnitude, i.e. estimates according to

$$|\hat{g}_i| > \beta \max\{|\hat{g}_i|\}$$

are utilized in the combining. Alternatively, the threshold may be formulated as a multiple of the interference and noise level, in the form of the estimate of the channel estimation variance, so that the following estimates are used:

$$|\hat{g}_i| > \alpha \sigma_{e_i}^2.$$

However, as it was seen in figure 5, "ghost" paths are not always smaller than true paths, and thus, although the thresholding methods can often improve performance by excluding some "ghost" paths, they may also significantly exclude true paths. Further the thresholding methods are generally not very robust, since the thresholds, especially the maximum-related threshold, tend to vary in time due to fading, while the true channel structure varies at a much slower rate. Thus simple thresholding methods are not optimal for avoiding the inclusion of "ghost" paths, and there is a need for better and more robust methods for detecting which path estimates correspond to actual physical paths, and which do not.

In the following a number of algorithms for deciding which delay estimates correspond to physical paths, and which estimates do not and should therefore be excluded from the RAKE combining, are presented. The presented algorithms can be divided in two different categories.

Algorithms of the first category are based on detection theory principles. In these algorithms, the true paths and the "ghost" paths can be distinguished by considering the statistical properties of the fading process and making a decision whether a given path coefficient is more likely to be a realization of a random variable from a noise-only or a path-plus-noise probability density function. Various different decision criteria are formulated. In these approaches, each path coefficient is analyzed and evaluated separately, and the estimated channel order equals the number of admitted path coefficients.

Algorithms of the other category are based on model order selection. In these algorithms, the physical order of the channel (the true number of multipath components) may be estimated by evaluating the extent to which the actual received data is in accordance with the different channel length hypotheses. Data reconstructed from the pilot symbols and different channel models are compared to the actual received data, and a penalty term is added that increases for larger model order hypotheses. A number of possible comparison criteria and penalty terms may be used in different embodiments. In all such approaches, the different channel order hypotheses are evaluated as composite collections of paths, and the collection with the best fit to the data is admitted as the channel model reported to the RAKE.

Below the invention is described in more detail.

Figure 6 shows a block diagram of one embodiment of the invention. As can be seen, a finger selection block 14 is inserted just before the RAKE combiner 13. Thus the finger selection algorithms are used to process the delay estimates provided by the delay estimator 11, before they are passed to the RAKE combiner 13. It is noted that typically, the delay estimator 11 produces delay estimates that are revised relatively infrequently. The finger selection stage uses the delay estimator output information and provides processed data to the RAKE. This processing is performed at a much higher rate than the delay estimation processing; in some embodiments it is done every time new channel estimates for the path candidates become available. The finger selection output results thus follow the instantaneous changes in the channel.

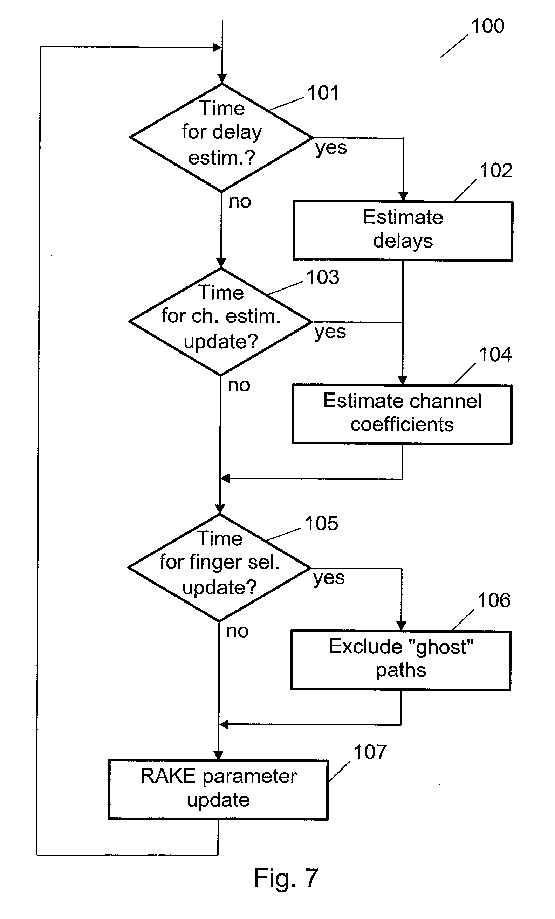

This process is also illustrated in the flow chart 100 in figure 7. In step 101 it is checked whether it is time for a new delay estimation, and, if so, delays are estimated in step 102. Following the estimation of new delays in step 102, new channel coefficients are estimated in step 104. In case it was not time for a new delay estimation, it is checked in step 103 whether it is time for a channel estimate update, since the channel coefficients, as described above, may be updated more frequently than the delay estimates. In step 105 it is checked if it is time for updating the finger selection, and if this is the case, the process of excluding the "ghost" paths according to the invention is performed in step 106. Finally, in step 107, the RAKE parameters are updated, i.e. the set of finger positions and/or the set of combining weights are adjusted.

Looking closer on algorithms of the first category, i.e. algorithms based on detection theory principles, we note that the purpose of the subsequent processing is to decide whether the $i$-th path estimate corresponds to a physical path or is caused by the estimator noise. We can assume that the delay estimator and the channel estimator has provided a vector of channel estimates $\hat{\mathbf{h}} = \lfloor \hat{h}_1 \dots \hat{h}_M \rfloor$ and the corresponding estimation variances $\sigma_{\varepsilon_i}^2$.

In its most basic form this problem is a detection problem with the following hypotheses,

- $\mathcal{H}_0$: $\hat{h}_i$ is caused only by receiver noise, i.e. $|\hat{h}_i| \sim \mathcal{R}(0,\sigma^2)$ (Rayleigh distribution)

- $\mathcal{H}_1$: $\hat{h}_i$ is caused by a physical path, i.e. $|\hat{h}_i| \sim \mathcal{R}(|h_i|, \sigma^2)$, where $|h_i| > 0$ (Rician distribution),
  wherein $\mathcal{R}(\alpha,\sigma^2)$ denotes the Rician distribution with the propability density function

$$f_R\left(r \middle| a, \sigma^2\right) = \frac{r}{\sigma^2} e^{-\frac{r^2 + a^2}{2a^2}} I_0\left(\frac{ar}{\sigma^2}\right).$$

If, for convenience, we denote $|\hat{h}_i| = r$ and the likelihood of the $j$-th hypothesis $\mathcal{H}_i$ as $\lambda_j = Pr[r]$, then

$$\lambda_0 = f_R\left(r \middle| 0, \sigma_{\varepsilon_i}^2\right),$$

and for a fixed $|h_i| = \alpha$

$$\lambda_1(a) = f_R\left(r \middle| a, \sigma_{\varepsilon_i}^2\right).$$

As a general principle, soft information often provides better performance than hard decisions. Thus, instead of (or in addition to) a hard decision between true path and "ghost", it may be advantageous to provide the probability of the coefficient belonging to class $\mathcal{H}$:

$$p_i = \frac{\lambda_1}{\lambda_0 + \lambda_1} \ .$$

In other words, the path probability may be reported in a hard (include/discard, $p_i \in \{0,1\}$) or soft ("the delay corresponds to a physical path with probability $p_i \in [0,1]$") form, depending on the detection theory method used.

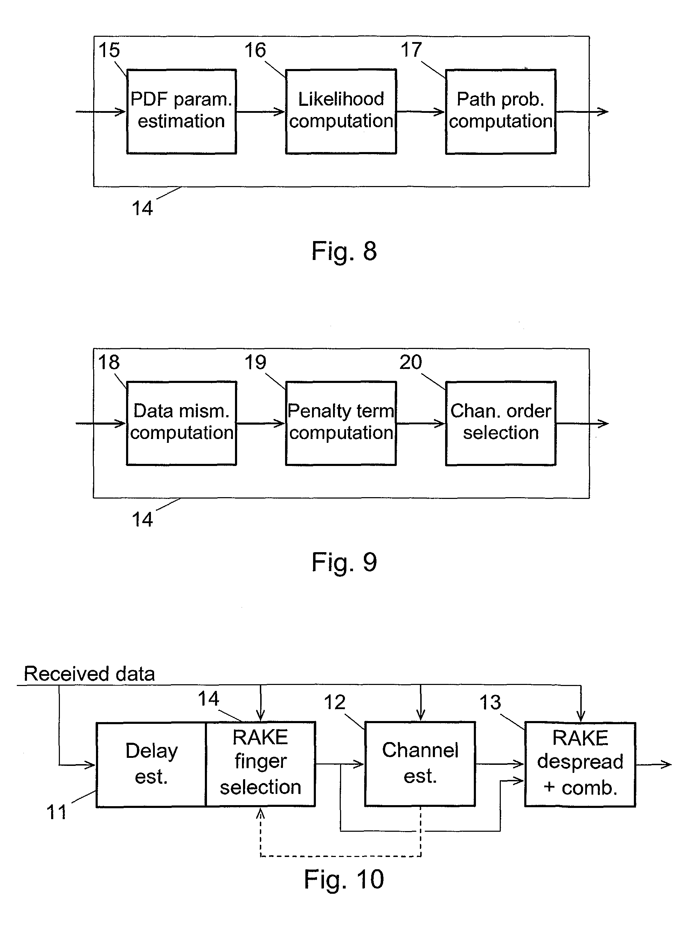

Thus, for algorithms of the first category, the structure of the finger selection block 14 can be as illustrated in figure 8. First, in block 15 the parameters of the probability density function (PDF) are estimated. Then, in block 16 the likelihood of the hypotheses is computed as described above, and finally, in block 17, the path probabilities are calculated.

Several different algorithms may be used for assessing the path probability, and some of them will be reviewed below. Since the true value of $|h_i|$ is unknown, approaches designed to deal with unknown parameters will be used.

One type of algorithm is based on known density of the true coefficients. We assume that the probability density function for $|h_i|$ is known, i.e. in practice it can be estimated from the previously received data. Various methods exist for that:

- Use past data to estimate the parameters $\mu_h$ and $\sigma_h^2$, and then use the expectation operator

$$\lambda_1 = E_a[\lambda_1(a)] = \int_0^\infty f_R(r|a,\sigma_{\varepsilon_i}^2) p_A(a) da$$

where

In most cases, numerical integration should be used to yield the desired likelihood value $\lambda_1$.

- Estimate the probability density function in its non-parametric, histogram form. Let the $k$-th of the $K$ bins, centered at $\alpha_k$, be $p(\alpha_k)$, with

$$\Sigma_k \, p(\alpha_k) = 1 \; . \text{ Then}$$

$$\lambda_1 \approx \sum_k f_R(r|a_k,\sigma_{\varepsilon_i}^2) p(a_k)$$

$$\approx \frac{r}{\sigma_{\varepsilon_i}^2} \sum_k p(a_k) e^{-\frac{r^2+a_k^2}{2\sigma_{\varepsilon_i}^2}} \hat{I}_0\left(\frac{a_k r}{\sigma_{\varepsilon_i}^2}\right)$$

where $\hat{i}_.(x)$ is an approximation to the modified Bessel function

$$\hat{I}_0(x) = \begin{cases} 1, & 0 \le x < 0.5 \\ \dfrac{1}{\sqrt{2\pi x}} e^x, & x \ge 0.5 \end{cases} \; .$$

The desired path confidence is then given by $p_i = \dfrac{\lambda_1}{\lambda_0 + \lambda_1}$

Another type of algorithm is based on Neyman-Pearson detection. The unknown parameter $|h_i|$ can be treated as unknown non-random, and a detection test can be designed without assuming anything about the hypothesis $\mathcal{H}_1$ . Instead, the design criterion is based on limiting the probability of "false alarms", $P_F = Pr\,[\mathcal{H}_1 \text{ chosen}|\mathcal{H}_0 \text{ ocured}]$, i.e. the probability that a coefficient not corresponding to a physical path is admitted.

This is a constant false alarm threshold test $r \underset{<}{\overset{>}{\phantom{.}}} \tau$. The false alarm is determined as

$$P_F = \int_\tau^\infty P[r|\mathcal{H}_0] dr = \alpha \; ,$$

i.e. essentially a tail probability of the Raleigh probability density function.

The threshold $\tau$ is then found by fixing $\alpha = \alpha^*$ and, for a given $\sigma_{\varepsilon_i}^2$, solving the above equation:

$$\int_\tau^\infty \frac{r}{\sigma_{\varepsilon_i}^2} e^{-\frac{r^2}{2\sigma_{\varepsilon_i}^2}} dr = \alpha^* .$$

While a closed-form solution to this equation does not exist, we can numerically pre-compute $\tau(\alpha, \sigma_{\varepsilon_i}^2)$ off-line for e.g. $\sigma_{\varepsilon_i}^2 = 1$ and use $\tau(\alpha, \sigma_{\varepsilon_i}^2) = \sigma_{\varepsilon_i} \tau(\alpha, 1)$.

Since this test does not directly control the probability of detection-$P_D = Pr[_1$ chosen$|_1$ occured]- which is determined by the unknown distribution of $|h_i|$ in some embodiments, $P_F$ may be heuristically adapted to different estimator noise levels or channel properties (Rayleigh vs. Rician fading, etc.). The method requires no prior assumptions about the fading statistics.

A further type of algorithm is based on maximum likelihood estimation of the unknown parameter. As an alternative to disregarding the unknown $|h_i|$ value or statistics completely, the missing parameter $a$ for $_1$ can be estimated from the current measurement, and then the hypothesis likelihoods may be computed. The maximum likelihood estimate â of $|h_i|$ is found by selecting $a$ that leads to the mode of $f_R(r|\alpha,\sigma_{\varepsilon_i}^2)$ being located at $r = |\hat{h}_i|$:

$$\left. \frac{\partial f_R\left(r|\hat{a},\sigma_{\varepsilon_i}^2\right)}{\partial r} \right|_{r=|\hat{h}_i|} = 0.$$

This is solved practically by pre-computing a lookup table of

$$\hat{a}\left(\left|\hat{h}_i\right|,\sigma_{\varepsilon_i}^2\right)$$

for $\sigma 2_{\varepsilon_i} = 1$ and producing

$$\hat{a}\left(\left|\hat{h}_i\right|,\sigma_{\varepsilon_i}^2\right) = \sigma_{\varepsilon_i} \hat{a}\left(\left|\hat{h}_i\right|,1\right).$$

As an alternative, the maximum likelihood estimate can be approximated as

$$\hat{a} \approx \sqrt{\max\left(\left|\hat{h}_i\right|^2 - \sigma_{\varepsilon_i}^2, 0\right)},$$

providing results close to the maximum likelihood over most of the range of $|\hat{h}_i|$.

As the essence of the maximum likelihood estimation is to find the distribution that best describes the received data, it is clear that such estimate $\hat{a}$ will always lead to $\lambda_1 \geq \lambda_0$, although, for the Rician distribution, this does not strictly hold for small positive values of $\hat{a}$. This test is thus not used for obtaining hard decisions, but the likelihood ratio

$$p_i = \frac{\lambda_1}{\lambda_0 + \lambda_1},$$

which is a good indication of how "different" the current measurement is from the statistics of noise alone.

As mentioned, algorithms of the other category are based on model order selection. The structure of the finger selection block 14 can here be as illustrated in figure 9. In these algorithms, the received data ($N_p$ measurements $y^{(k)}$, $k = 1 \ldots N_p$, where $N_p$ is the length of the training sequence) are matched to different order models $\theta(n)$ in the data mismatch block 18, the metric being the log likelihood function $l(n)$ of the measured data conditioned on the current model and a penalty term $t(n)$ that grows as the model order grows. The penalty term is computed in the block 19. The metric for order n is given as

$$\mu(n) = -2l(n) + t(n),$$

and the correct and true channel order $N_r$ is estimated as

$$\hat{N}_r = \arg\min_n \mu(n)$$

where all model orders $n$ of practical interest are evaluated. The log likelihood is computed as

$$l(n) = \sum_{k=1}^{N_p} \log f\left(\mathbf{y}^{(k)} \big| \theta(n)\right),$$

which equals the Euclidean distance between the received data and the order-$n$ estimated data based on the channel estimates,

$$l(n) = -\sum_{k=1}^{N_p} \left| \mathbf{y}^{(k)} - x\overline{\mathbf{h}}(n) \right|^2 .$$

The order-n model $\overline{\mathbf{h}}(n)$ is described by a probability matrix $P(n)$, where the probabilities of the $n$ paths with the largest estimated magnitudes $|\hat{h}_i|$ are set to $p_i = 1$, and the rest to zeros. For a practical implementation, the search over all possible order-n models can be replaced by an ordered search
where the n best paths are considered at each order hypothesis. In this case, the quantity

$$l(n) = \log f\left(\mathbf{y}^{(1\ldots N_p)} \big| \overline{\mathbf{h}}(n)\right) = -\sum_{k=1}^{N_p} \sum_{i=1}^{N_f} \frac{\left| y_i^{(k)} - p_i(n)\hat{h}_i x^{(k)} \right|^2}{2\sigma_{n_i}^2}$$

can be efficiently calculated incrementally. The channel order selection is performed in block 20.

The penalty term structure depends on the particular estimation method used.

When the AIC method suggested in H. Akaike, "A new look at the statistical model identification", IEEE Trans. Automat. Contr., vol. AC-19, pp. 716-723, 1974 is used for estimation, the penalty term is $t(n) = 2n$.

When the MDL method suggested in J. Rissanen, "Modelling by shortest data description", Automatica, vol. 14, pp. 465-478, 1978 is used for estimation, the penalty term is $t(n) = n \log M$.

When the Consistent AIC method suggested in C. M. Hurvich and C. L. Tsai, "Regression and time series model selection in small samples", Biometrica, vol. 76, pp. 297-307, 1989 is used for estimation, the penalty term is

$$t(n) = \frac{M^2 + M\,(n\text{-}1)}{M\text{-}n\text{-}1}.$$

When the Consistent unbiased AIC method suggested in S. H. Kwon and M. Sugeno, "Criterion for selecting model order in identification", Electronics Lett., vol. 35, pp. 292-293, 1999 is used for estimation, the penalty term is

$$t(n) = \frac{Mn}{M\text{-}n\text{-}2} + \log|J(n)| + n \log \frac{M}{2\pi}$$

When the CAICF method suggested in H. Bozdogan, "Model selection and Akaike's information criterion (AIC): The general theory and its analytical extensions", Psychometrica, vol. 52, pp. 345-370, 1987 is used for estimation, the penalty term is $t(n) = \log|J(n)| + n(\log M + 2)$.

It is noted that in the above penalty terms the $J(n)$ terms can be discarded as they do not depend on the choice of $n$.

In the receiver structure described above and shown in figure 6, the RAKE finger selection algorithms are used to process the delay estimates provided by the delay estimator stage 11 before they are passed to the RAKE 13. In some embodiments of this receiver structure the delay estimator 11 produces delay estimates that are revised relatively infrequently. The RAKE finger selection stage 14 uses the output information from the delay estimator 11 and provides processed data to the RAKE 13. This processing is performed at a much higher rate than the delay estimator processing; in some embodiments it is done every time new channel estimates for the path candidates become available. The RAKE finger selection output results thus follow the instantaneous changes in the channel.

In other embodiments, the RAKE finger selection stage 14 may be incorporated in the delay estimator stage 11, so that the presumed "ghost" paths are already removed at the delay estimator output. This is illustrated in figure 10. In some of these embodiments, the RAKE finger selection stage 14 may use the channel estimates (complex or power) computed internally as part of the tracking process in the delay estimator, or it may have access to the main channel estimates that are also provided to the RAKE, as it is indicated by the dashed arrow in figure 10.

In the above, we have considered the case where the number of delays reported to the RAKE equals the number K of RAKE fingers available for combining. If a higher number of paths are reported, the K strongest are selected.

It is noted that the computational load of the above mentioned algorithms is not significant compared to the channel estimation operations.

Although a preferred embodiment of the present invention has been described and shown, the invention is not restricted to it, but may also be embodied in other ways within the scope of the subject-matter defined in the following claims. For example, the finger selection information may be conveyed in different forms, e.g. a modified list of delays, a modified list of channel coefficients, a list of path probabilities, etc. Some other details and options that fit into the idea can be mentioned. Alternative ways of formulating the thresholds in the methods based on detection theory may be devised. Alternative penalty term expressions may be used in the model order selection methods. Alternative channel coefficient update, delay estimate update, and RAKE finger selection update scheduling relationships may be used.

**Claims**

1.    A method of detecting multipath components in a time-varying fading radio channel (3, 4, 6) in a digital wireless communications system in which individual multipath components of a signal transmitted through said channel are received with individual delays ($\tau_i$), the method comprising the steps of:

   •    estimating the delays of said individual multipath components by calculating a number of delay estimates, wherein said number of delay estimates may include estimates which do not correspond to actual physical paths, and
   •    using at least some of said delay estimates for RAKE combining,

   **characterized in that** the method further comprises the steps of:

   •    deciding which delay estimates most likely correspond to actual physical paths, and
   •    including in the RAKE combining only those delay estimates that are decided to correspond to actual physical paths.

**2.** A method according to claim 1, **characterized in that** the step of deciding which delay estimates most likely correspond to actual physical paths comprises the steps of:

- formulating models for "path" and "no path" hypotheses based on the statistical properties of channel fading,
- calculating for each delay estimate the probability of the estimate belonging to the "path" hypothesis, and
- deciding from the calculated probabilities which delay estimates should be included in the RAKE combining.

**3.** A method according to claim 2, **characterized in that** said probabilities are calculated by means of a directly estimated density of true coefficients.

**4.** A method according to claim 2, **characterized in that** said probabilities are calculated by means of Neyman-Pearson detection.

**5.** A method according to claim 2, **characterized in that** said probabilities are calculated by means of maximum likelihood estimation of the unknown parameter.

**6.** A method according to claim 1, **characterized in that** the step of deciding which delay estimates most likely correspond to actual physical paths comprises the steps of:

- calculating a measure of Euclidean distance between received data and data modelled according to different channel order hypotheses,
- adding a channel order dependent penalty term to said measure of distance to obtain a modified measure for each channel order hypothesis,
- selecting the channel order having the lowest modified measure, and
- deciding from the selected channel order which delay estimates should be included in the RAKE combining.

**7.** A receiver (2) having means (11, 12, 13) for detecting multipath components in a time-varying fading radio channel (3, 4, 6) in a digital wireless communications system in which individual multipath components of a signal transmitted through said channel are received with individual delays ($\tau_i$),

- the receiver comprising means (11) for estimating the delays of said individual multipath components by calculating a number of delay estimates, wherein said number of delay estimates may include estimates which do not correspond to actual physical paths, and
- the receiver being adapted to use at least some of said delay estimates for RAKE combining,
  **characterized in that** the receiver further comprises means (14) for deciding which delay estimates most likely correspond to actual physical paths and selecting for the RAKE combining only those delay estimates that are decided to correspond to actual physical paths.

**8.** A receiver according to claim 7, **characterized in that** the means (14) for deciding and selecting delay estimates comprises:

- means (15) for formulating models for "path" and "no path" hypotheses based on the statistical properties of channel fading, and
- means (17) for calculating for each delay estimate the probability of the estimate belonging to the "path" hypothesis, and deciding from the calculated probabilities which delay estimates should be included in the RAKE combining.

**9.** A receiver according to claim 8, **characterized in that** said means (17) for calculating probabilities is adapted to use a directly estimated density of true coefficients.

**10.** A receiver according to claim 8, **characterized in that** said means (17) for calculating probabilities is adapted to use Neyman-Pearson detection.

**11.** A receiver according to claim 8, **characterized in that** said means (17) for calculating probabilities is adapted to use maximum likelihood estimation of the unknown parameter.

**12.** A receiver according to claim 7, **characterized in that** the means (14) for deciding and selecting delay estimates comprises:

- means (18) for calculating a measure of Euclidean distance between received data and data modelled according to different channel order hypotheses,
- means (19) for adding a channel order dependent penalty term to said measure of distance to obtain a modified measure for each channel order hypothesis, and
- means (20) for selecting the channel order having the lowest modified measure and deciding from the selected channel order which delay estimates should be included in the RAKE combining.

**13.** A receiver according to claim 7, **characterized in that** the means (14) for deciding and selecting delay estimates is arranged separately from said estimating means (11) to select a subset of the delay estimates provided by the estimating means (11).

**14.** A receiver according to claim 7, **characterized in that** the means (14) for deciding and selecting delay estimates is integrated into said estimating means (11) so that only the selected delay estimates are provided by the estimating means (11).

Fig. 1

Fig. 2

Fig. 3

Fig. 4

Fig. 5

Fig. 6

100

```
           ┌─────────────┐
           ▼
      ╱ Time   ╲  101
     ╱ for delay ╲  yes ──────────┐
     ╲  estim.?  ╱                 ▼
      ╲         ╱          ┌─────────────────┐  102
           │ no           │    Estimate     │
           │              │     delays      │
           ▼              └─────────────────┘
      ╱ Time    ╲  103            │
     ╱ for ch. estim.╲ yes ───────┤
     ╲  update?  ╱                 ▼
      ╲         ╱          ┌─────────────────┐  104
           │ no           │ Estimate channel│
           │              │   coefficients  │
           │              └─────────────────┘
           ▼
      ╱ Time     ╲  105
     ╱ for finger sel.╲ yes ──────┐
     ╲   update?  ╱                ▼
      ╲          ╱         ┌─────────────────┐  106
           │ no           │ Exclude "ghost" │
           │              │     paths       │
           │              └─────────────────┘
           ▼
      ┌─────────────────┐  107
      │ RAKE parameter  │
      │     update      │
      └─────────────────┘
```

Fig. 7

Fig. 8

Fig. 9

Received data

Fig. 10

**European Patent Office**

**EUROPEAN SEARCH REPORT**

Application Number

EP 03 38 8039

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | HOSANGADI G S ET AL: "Pipelined sequential acquisition in a direct sequence spread spectrum communication system" PERSONAL WIRELESS COMMUNICATIONS, 1997 IEEE INTERNATIONAL CONFERENCE ON MUMBAI, INDIA 17-19 DEC. 1997, NEW YORK, NY, USA,IEEE, US, 17 December 1997 (1997-12-17), pages 189-193, XP010268095 ISBN: 0-7803-4298-4 | 1,2,7,8 | H04B1/707 |
| Y | * abstract; figures 1,2 * * page 189, left-hand column - page 190, right-hand column * | 3-6,9-12 | |
| X | US 2002/136234 A1 (NILSSON JOHAN ET AL) 26 September 2002 (2002-09-26) * abstract; figures 1,2 * | 1,2,7,8 | |
| Y | * page 3, paragraph 28 - paragraph 29 * | 3-6,9-12 | |
| X | BEJJANI E ET AL: "Adaptive channel delays selection for WCDMA mobile system" VEHICULAR TECHNOLOGY CONFERENCE, 1999. VTC 1999 - FALL. IEEE VTS 50TH AMSTERDAM, NETHERLANDS 19-22 SEPT. 1999, PISCATAWAY, NJ, USA,IEEE, US, 19 September 1999 (1999-09-19), pages 203-207, XP010352949 ISBN: 0-7803-5435-4 * abstract * | 1,2,7,8 | TECHNICAL FIELDS SEARCHED (Int.Cl.7) H04B |
| Y | * page 205, right-hand column * | 3-6,9-12 | |
| X | WO 99 35763 A (ERICSSON GE MOBILE INC) 15 July 1999 (1999-07-15) * abstract * | 1,7 | |
| Y | * page 17, line 7 - page 20, line 9 * | 3-6,9-12 | |

-/--

The present search report has been drawn up for all claims

| Place of search | Date of completion of the search | Examiner |
|---|---|---|
| MUNICH | 9 October 2003 | Ricciardi, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**European Patent Office**

**EUROPEAN SEARCH REPORT**

Application Number

EP 03 38 8039

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | POOR, VINCENT H.: "An Introduction to Signal Detection and Estimation" 1998 , SPRINGER-VERLAG , NEW YORK ET AL. XP002257199 ISBN: 0-387-96667-6 * page 7 - page 55 * ----- | 3-6,9-12 | |

TECHNICAL FIELDS SEARCHED (Int.Cl.7)

The present search report has been drawn up for all claims

| Place of search | Date of completion of the search | Examiner |
|---|---|---|
| MUNICH | 9 October 2003 | Ricciardi, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 03 38 8039

This annex lists the patent family members relating to the patent documents cited in the above-mentioned European search report.
The members are as contained in the European Patent Office EDP file on
The European Patent Office is in no way liable for these particulars which are merely given for the purpose of information.

09-10-2003

| Patent document cited in search report | | Publication date | Patent family member(s) | | Publication date |
|---|---|---|---|---|---|
| US 2002136234 | A1 | 26-09-2002 | WO | 02067453 A1 | 29-08-2002 |
| WO 9935763 | A | 15-07-1999 | AU | 747307 B2 | 16-05-2002 |
| | | | AU | 2216799 A | 26-07-1999 |
| | | | BR | 9906840 A | 17-10-2000 |
| | | | CN | 1288613 T | 21-03-2001 |
| | | | EE | 200000413 A | 17-12-2001 |
| | | | EP | 1048127 A1 | 02-11-2000 |
| | | | JP | 2002501323 T | 15-01-2002 |
| | | | TR | 200002016 T2 | 22-01-2001 |
| | | | WO | 9935763 A1 | 15-07-1999 |

For more details about this annex : see Official Journal of the European Patent Office, No. 12/82